Europäisches Patentamt

European Patent Office

Office européen des brevets

(19)

(11) Veröffentlichungsnummer: **0 175 883**
**B1**

(12) **EUROPÄISCHE PATENTSCHRIFT**

(45) Veröffentlichungstag der Patentschrift: **27.06.90**

(51) Int. Cl.⁵: **G 05 D 1/08, B 64 C 13/50**

(21) Anmeldenummer: **85109649.5**

(22) Anmeldetag: **31.07.85**

(54) **Vorrichtung zur Verbesserung der Längssteuerstabilität von Luftfahrzeugen.**

(30) Priorität: **28.08.84 DE 3431597**

(43) Veröffentlichungstag der Anmeldung:
**02.04.86 Patentblatt 86/14**

(45) Bekanntmachung des Hinweises auf die
Patenterteilung:
**27.06.90 Patentblatt 90/26**

(84) Benannte Vertragsstaaten:
**DE FR GB IT**

(56) Entgegenhaltungen:
**EP-A-0 003 947**
**FR-A-2 339 920**
**GB-A-2 050 980**
**GB-A-2 065 042**

(73) Patentinhaber: **Messerschmitt-Bölkow-Blohm**
**Gesellschaft mit beschränkter Haftung**
**Robert-Koch-Strasse**
**D-8012 Ottobrunn (DE)**

(72) Erfinder: **König, Herbert, Dipl.-Ing.**
**Schönstrasse 45**
**D-8000 München 90 (DE)**

Courier Press, Leamington Spa, England.

EP 0 175 883 B1

# EP 0 175 883 B1

**Beschreibung**

Die Erfindung betrifft eine Vorrichtung zur Verbesserung der Längssteuerstabilität von Luftfahrzeugen, insbesondere von Hubschraubern, mit einem einerseits mit dem Hauptstellantrieb für die Höhenruder- bzw. Rotorblatteinstellung und andererseits mit dem diesem zugeordneten Steuerknüppel bzw. Rotorblatteinstellung und andererseits mit dem diesem zugeordneten Steuerknüppel verbundenen Steuergestänge, in das ein das Steuergestänge steuerbar verlängernder Korrekturstellantrieb Hauptstellantrieb messenden Weggeber sowie einem die Fluggeschwindigkeit messenden Fluggeschwindigkeitsgeber.

Bei Luftfahrzeugen, insbesondere Hubschraubern, bei denen die Vorwärtsgeschwindigkeit über entsprechende Einstellung des Höhenruders bzw. der Rotorblätter mit Hilfe eines Steuerknüppels beeinflußt wird, ist verlangt, daß der Steuerweg des Steuerknüppels mit zunehmender Fluggeschwindigkeit ebenfalls zunimmt. Der Steuerknüppel ist über ein Steuergestänge mit dem Hauptstellantrieb für die Höhenruder- bzw. Rotorblatteinstellung verbunden. Aufgrund der flugmechanischen Eigenschaften insbesondere von Hubschraubern weist die funktionale Abhängigkeit des Stellweges von der Fluggeschwindigkeit zunächst jedoch immer ein Maximum auf, bei dessen Überschreitung der Steuerweg mit zunehmender Fluggeschwindigkeit wieder abnimmt. Da dies erhebliche Schwierigkeiten bei der Flugführung für den Piloten mit sich bringt, wurden bereits Maßnahmen ergriffen, um den Steuerweg des Steuerknüppels der geforderten funktionalen Abhängigkeit anzupassen.

So ist bei der in der EP—A—0 003 947 geschilderten Vorrichtung in das Steuergestänge ein Korrekturstellantrieb eingefügt, mit dem das Steuergestänge in steuerbarer Weise verlängert werden kann. Damit kann bei richtiger Ansteuerung des Korrekturstellantriebes erreicht werden, daß der Steuerweg des Steuerknüppels auch bei Überschreiten der kritischen Fluggeschwindigkeit, bei der ohne Korrekturmaßnahmen der Gradient des Steuerweges in Abhängigkeit von der Fluggeschwindigkeit wieder abnehmen würde, mit ansteigender Fluggeschwindigkeit weiter zunimmt. Bei der bekannten Vorrichtung ist ein Weggeber vorgesehen, der den Steuerweg des Steuergestänges zwischen Korrektur- und Hauptstellantrieb mißt. Das Ausgangssignal dieses Weggebers wird nach Addition zu einem weiteren Ansteuersignal verstärkt und direkt dem Korrekturstellantrieb zugeführt. Das weitere Ansteuersignal wird auf komplizierte Weise aus einem von einem Fluggeschwindigkeitsgeber gewonnenen Fluggeschwindigkeitssignal sowie einem von einem Positionssensor abgegebenen Stellungssignal des Kollektivhebels gebildet. Insgesamt sind zur Ansteuerung des Korrekturstellantriebes somit drei Meßwerte erforderlich, die vom Weggeber, vom Fluggeschwindigkeitsgeber sowie vom Positionssensor des Kollektivhebels kommen. Die Verarbeitung dieser drei Meßwerte erfordert eine relativ komplizierte und damit aufwendige und störanfällige Schaltung. Außerdem führt diese bekannte Art und Weise, das Ansteuersignal für den Korrekturstellantrieb zu bilden, zu unverhältnismäßig großen korrigierten Steuerwegen des Steuerknüppels. Dies ist jedoch aus Platzgründen nicht immer erwünscht.

Der Erfindung liegt daher die Aufgabe zugrunde, eine Vorrichtung der eingangs genannten Art bereitszustellen, mit der auf schaltungsmäßig einfache Weise eine Verbesserung der Längssteuerwegstabilität erreichbar ist, ohne daß die korrigierten Steuerwege des Steuerknüppels zu groß werden.

Diese Aufgabe wird gemäß der Erfindung durch folgende Vorrichtungsmerkmale gelöst: Ein mit dem Ausgangssignal des Weggebers beaufschlagtes Verzögerungsglied, ein diesem nachgeschaltetes erstes Differenzierglied, ein mit dem Ausgangssignal des Fluggeschwindigkeitsgebers beaufschlagtes zweites Differenzierglied, einen diesem nachgeschalteten linearen Verstärker, ein dessen Ausgangssignal von dem des ersten Differenziergliedes subtrahierendes Summationsglied, einen diesem nachgeschateten, ausgangsseitig mit dem Korrekturstellantrieb verbundenen Integrator, einen zwischen Summationsglied und Integrator eingefügten Schalter sowie eine diesen ansteuernde Logikschaltung, welche den Schalter schließt, sobald der Gradient der Funktion $D_T(v)$ ($D_T$ = verzögertes Steuerwegsignal am Ausgang des Verzögerungsgliedes (7), v = Fluggeschwindigkeit) einen vorgebbaren, mit dem Verstärkungsfaktor des Verstärkers (10) identischen Grenzwert unterschreitet.

Gemäß einer vorteilhaften Weiterbildung der Erfindung weist die Logikschaltung folgende Bauelemente auf: Einen die Ausgangssignale des ersten und des zweiten Differenziergliedes aufnehmenden ersten Multiplizierter, einen die Ausgangssignale des zweiten Differenziergliedes und des Verstärkers aufnehmenden, zweiten Multiplizierer, ein dessen Produktsignal von dem des ersten Multiplizierers subtrahierendes Summationsglied sowie eine im Falle eines negativen Summensignales des Summationsgliedes den Schalter schließende Schaltlogik. Darüber hinaus kann es zweckmäßig sein, dem Integrator ausgangsseitig einen Verstärker, insbesondere einen solchen mit einem Verstärkungsfaktor $K \leq 1$, nachzuschalten.

Im folgenden wird ein Ausführungsbeispiel der Erfindung anhand von Abbildungen näher erläutert. Es zeigen

Fig. 1a-d vier graphische Darstellungen der Abhängigkeit des Steuerweges von der Fluggeschwindigkeit,

Fig. 2 eine Vorrichtung zur Verbesserung der Längssteuerstabilität gemäß der Erfindung für einen Hubschrauber,

Fig. 3 eine Ausführungsform einer Logikschaltung für die Vorrichtung gemäß Fig. 2.

2

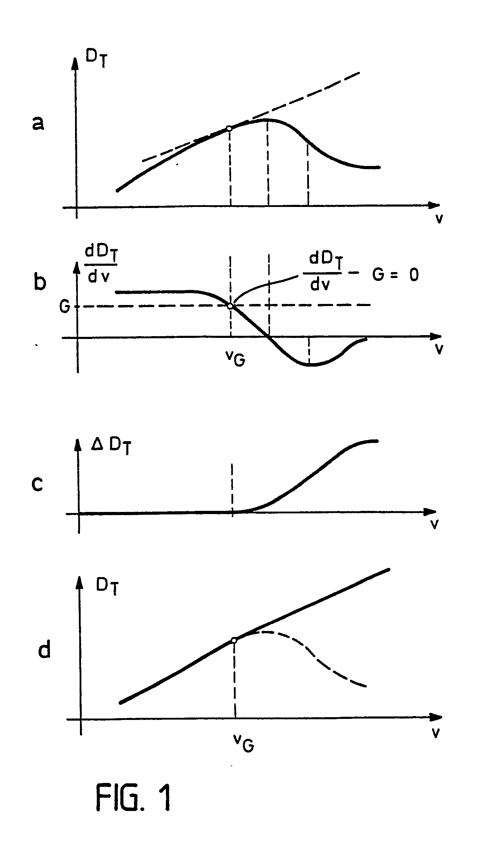

Fig. 1a zeigt die Abhängigkeit des Steuerweges $D_T$ des Steuerknüppels von der Fluggeschwindigkeit v für den Fall, daß kein Korrekturstellantrieb vorhanden ist. Die Kurve $D_T$(v) steigt zunächst mit der Fluggeschwindigkeit v an, durchläuft dann ein Maximum und fällt danach wieder ab. Dieser Kurvenverlauf ist unmittelbar durch die nicht korrigierbaren Flugeigenschaften des Hubschraubers bedingt. Erwünscht ist jedoch, daß der Steuerweg $D_T$ des Steuerknüppels einen mit zunehmender Fluggeschwindigkeit v ständig ansteidenden Verlauf haben soll, um Orientierungsschwierigkeiten des Piloten hinsichtlich der Richtung der einzugebenden Steuerbewegungen zu vermeiden. Ein solcher erwünschter Kurvenverlauf $D_T$ (v) ist in Fig. 1d durch die ausgezogene Kurve repräsentiert. In Fig. 1b ist der aus Fig. 1a abgeleitete Verlauf der Steigung $dD_T/dv$ der Kurve $D_T$ (v) dargestellt, wobei das Maximum der zuletzt genannten Kurve am Ort des Nulldurchgangs der Steigungs- bzw. Gradientkurve liegt.

Gemäß der Forderung, eine stets positive Steigung der Kurve $D_T$(v) zu erzielen, darf die Gradientkurve $dD_T/dv$ einen vorgebbaren positiven Grenzwert G nicht unterschreiten. Bei einer derartigen Grenzgeschwindigkeit $v_G$ muß demnach eine Korrektur einsetzen. Die Bedingung für diesen Korrekturbereich lautet demnach:

$$\frac{dD_T}{dv} = \frac{dD_T}{dt} \cdot \frac{dt}{dv} = \frac{\dot{D}_T}{\dot{v}} < G \tag{1}$$

oder

$$\frac{dD_T}{dv} - G = \frac{\dot{D}_T}{\dot{v}} - G < 0 \tag{2}$$

Gemäß der Erfindung wird hieraus durch Integration ein Ansteuersignal $\Delta D_T$ gemäß

$$\Delta D_T = \int (\frac{dD_T}{dv} - G)dv = \int (\dot{D}_T - G\dot{v})dt \tag{3}$$

zur Ansteuerung des Korrekturstellantriebes gewonnen.

Dieses Ansteuersignal wird nur dann an den Korrekturstellantrieb abgegeben, wenn die Bedingung (2) erfüllt ist. Um das Auftreten einer Größe, die zu Null werden kann, im Nenner des Bruches zu vermeiden, wird die Bedingung (2) mit dem nie negativ werdenden Faktor $\dot{v}^2$ multipliziert, so daß folgende neue Bedingung entsteht:

$$\dot{D}_T\dot{v} - G\dot{v}^2 < 0 \tag{4}$$

Selbstverständlich kann die Bedingung (2) auch auf andere Weise durch Multiplikation mit nicht negativen Faktoren modifiziert werden, ohne daß de Kern der Bedingung davon berührt wird.

Das wie oben beschrieben durch Integration gebildete Ansteuersignal $\Delta D_T$ bewirkt eine Steuerwegkorrektur, wie sie in Fig. 1c wiedergegeben ist. Durch Addition der Kurven $D_T$(v) der Fig. 1a und 1c ergibt sich der in Fig. 1d wiedergegebene Kurvenverlauf, der den Steuerweg des Steuerknüppels wiedergibt, während Fig. 1c nur den zusätzlich durch den Korrekturantrieb bewirkten Anteil dieses Steuerweges repräsentiert.

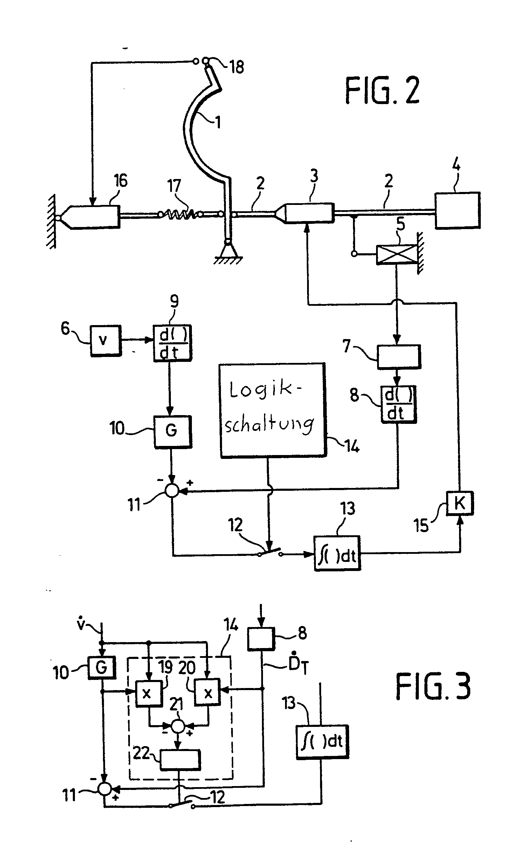

Fig. 2 zeigt eine Ausführungsform der Vorrichtung gemäß der Erfindung für einen Hubschrauber. Dargestellt ist ein Steuerknüppel 1, der über ein Steuergestänge 2 mit dem Hauptstellantrieb 4 für die Rotorblatteinstellung in Verbindung steht. In bekannter Weise greift gegenüber dem Steuergestänge 2 am Steuerknüppel 1 ein Federpaket 17 an, welches dazu dient, nach Signalgebung durch einen am Steuerknüppel 1 angebrachten Trimmschalter 18 mittels eines Trimmotors 16 den Steuerknüppel 1 auszutrimmen, d.h. bei stabiler Fluglage kräftefrei zu halten.

In das Steuergestänge 2 ist ein Korrekturstellantrieb 3 eingefügt, mit dem das Steuergestänge 2 aus einer eingefahrenen Position des Korrekturstellantriebes heraus verlängert werden kann. Ein Weggeber 5 mißt den Stellweg des Steuergestänges 2 an einem Punkt, der zwischen dem Korrekturstellantrieb und dem Hauptstellantrieb gelegen ist.

Der durch den Weggeber 5 gemessene Steuerweg entspricht genau der Kurve in Fig. 1a, d.h. den wirklich auf den Hauptstellantrieb des Rotors gegebenen Stellweg. Wäre der Korrekturstellantrieb 3 nicht vorhanden, so würde der Steuerweg des Steuerknüppels 1 immer genau mit diesem vom Weggeber 5 gemessenen Steuerweg übereinstimmen. Oberhalb der kritischen Geschwindigkeit $v_G$ müsste dann der Steuerknüppel 1 gemäß der Kurve in Fig. 1a zur weiteren Erhöhung der Geschwindigkeit wieder zurückgenommen werden. Dies wird jedoch durch den Korrekturstellantrieb 3 bei richtiger Ansteuerung desselben verhindert bzw. sogar überkompensiert, so daß der Steuerknüppel 1 in derselben Richtung, nämlich nach vorne, weiterbewegt werden kann, während gleichzeitig der Korrekturstellantrieb 3 der Fig. 2 nach rechts hin eine Verlängerung des Steuergestänges 2 bewirkt, wodurch gegenüber dem Bereich $v < v_G$

eine Bewegungsumkehr des Steuergestänges 2 zwischen dem Korrekturstellantrieb 3 und dem Hauptstellantrieb 4 gegeben ist.

Um mit Hilfe des Korrekturstellantriebes 3 eine derartige Wirkung zu erzielen, wird folgende schaltungstechnische Maßnahme vorgesehen: Von einem an sich bekannten Fluggeschwindigkeitsgeber 6, beispielsweise einem Strohrohr (Pitot), wird ein Fluggeschwindigkeitssignal abgegeben, welches in einem Differenzierer 9 differenziert und anschließend in einem Verstärker 10 mit einem Verstärkungsfaktor G beaufschlagt wird. Dieser Verstärkungsfaktor G ist der Grenzwert in Fig. 1b bzw. Bedingung (1). Er kann je nach Wunsch eingestellt werden. Das Ausgangssignal des Verstärkers 10, dem Produkt $\dot{v} \cdot G$ entsprechend, wird einem Summationsglied 11 zugeleitet.

Gleichzeitig gibt der Weggeber 5 ständig ein dem Steuerweg D des zum Hauptstellantrieb 4 führenden Steuergestänges 2 entsprechendes Signal ab. Dieses wird einem Verzögerungsglied 7, z.B. mit einer Zeitkonstante $T_1$ zugeführt, dessen Ausgangssignal $D_T$ anschließend in einem Differenzierglied 8 differenziert wird. Dessen Ausgangssignal $\dot{D}_T$ wiederum gelangt ebenfalls zum Summationsglied 11, so das vom Verstärker 10 eintreffende Signal von ihm subtrahiert wird.

Das Verzögerungsglied 7 soll hinsichtlich seiner Zeitkonstanten so ausgelegt sein, daß es in etwa die zeitliche Trägheit des Hubschraubers hinsichtlich seiner Antwort auf ein Steuerkommando wiedergibt.

Im Falle eines Hubschraubers liegt die maßgebende Zeitkonstante T größenordnungsmäßig bei etwa 10 sec. Das Verzögerungsglied 7 bewirkt bei einem vom Weggeber her eintreffenden Sprungsignal, einem Extremfall, daß das Ausgangssignal $D_T$ allmählich ansteigt und erst mit einer gewissen, von der Zeitkonstante T abhängigen Verzögerung die Höhe des Eingangssignals erreicht. Ist das Verzögerungsglied 7 beispielsweise von erster Ordnung, so folgt dieser Anstieg in bekannter Weise einer e-Funktion.

Im Summationsglied 11 wird die Differenz aus den beiden eintreffenden Signalen gebildet und anschließend einem Integrator 13 zugeführt. Dies geschieht jedoch nur, wenn ein letzterem vorgeschalteter Schalter 12 geschlossen ist. Dieser wird von einer Logikschaltung 14 kontrolliert, welche den Schalter erst dann schließt, wenn die Geschwindigkeit $v_G$ überschritten wird, in Übereinstimmung mit der Bedingung (1). Das Ausgangssignal des Integrators 13 entspricht dann dem durch Gleichung (3) gegebenen Ansteuersignal für den Korrekturstellantrieb 3. Dieses Ausgangssignal kann noch in einem Verstärker 15 verstärkt werden, wobei in der Praxis Verstärkungsfaktoren $K \leq 1$ in Frage kommen werden.

Zur optimalen Anpassung des Regelverhaltens der gegebenen Schaltung sind insgesamt drei Parameter vorhanden, und zwar die Zeitkonstanten des Verzögerungsgliedes 7 sowie die Verstärkungsfaktoren G und K der Verstärker 10 und 15.

Fig. 3 zeigt eine mögliche und besonders einfache Ausführungsform für die Logikschaltung 14, durch welche die Bedingung (4) realisiert wird. Die Logikschaltung 14 enthält im wesentlichen zwei Multiplizierer 19 und 20, ein das Ausgangssignal des Multiplizierers 19 von dem des Multiplizierers 20 subtrahierendes Summationsglied 21 sowie eine das Summen- bzw. Differenzsignal dieses Summationsgliedes 21 verarbeitende Schaltlogik 22, die nur dann, wenn die Bedingung (4) erfüllt ist, den Schalter 12 schließt. Hierzu werden dem Multiplizierer 19 die Ausgangssignale des Differenziergliedes 9 und des Verstärkers 10 zugeführt, so daß am Ausgang des Multiplizierers 19 das Produktsignal $G \cdot \dot{v}^2$ ansteht. Dem Multiplizierer 20 werden die Ausgangssignale der Differenzierglieder 8 und 9 zugeführt, so daß an dessen Ausgang das Produktsignal $\dot{D}_T \cdot \dot{v}$ abgegeben wird.

Für die Bedingung (4) ist es gleichgültig, welche flugmechanische Einflußgröße, etwa Lufttemperatur, Rotordrehzahl, Flughöhe, Gewicht usw., als Ursache für die Notwendigkeit einer Steuerwegstabilisierung auftritt, die Stabilisierung erfolgt immer maßgerecht.

Der Stellbereich des Korrekturstellantriebes 3 braucht nur so groß zu sein, daß der Steuerweg-Gradient des Steuerknüppels 1 über den gesamten maßgebenden Fluggeschwindigkeitsbereich den vorgegebenen Grenzwert G nicht unterschreitet.

**Patentansprüche**

1. Vorrichtung zur Verbesserug der Längssteuerstabilität von Luftfahrzeugen, insbesondere von Hubschraubern, mit einem einerseits mit dem Hauptstellantrieb (4) für die Höhenruder- bzw. Rotorblatteinstellung und andererseits mit dem diesem zugeordneten Steuerknüppel (1) verbundenen Steuergestänge (2), in das ein das Steuergestänge steuerbar verlängernder Korrekturstellantrieb (3) eingefügt ist, einem den Steuerweg des Steuergestänges zwischen dem Korrekturstellantrieb und dem Hauptstellantrieb messenden Weggeber (5) sowie einem die Fluggeschwindigkeit messenden Fluggeschwindigkeitsgeber (6), gekennzeichnet durch

ein mit dem Ausgangssignal (D) des Weggebers (5) beaufschlagtes Verzögerungsglied (7), ein diesem nachgeschaltetes erstes Differenzierglied (8),

ein mit dem Ausgangssignal des Fluggeschwindigkeitsgebers (6) beaufschlagtes zweites Differenzierglied (9), einen liesem nachgeschalteten linearen ersten Verstärker (10),

ein dessen Ausgangssignal von dem des ersten Differenzergliedes (8) subtrahierendes Summationsglied (11), einen diesem nachgeschalteten, ausgangsseitig mit dem Korrekturstellantrieb (3) verbundenen Integrator (13),

einen zwischen Summationsglied (11) und Integrator (13) eingefügten Schalter (12) sowie eine diesen ansteuernde Logikschaltung (14), welche den Schalter (12) schließt, sobald der Gradient der Funktion $D_T(v)$,

wobei $D_T$ das verzögerte Steuerwegsignal am Ausgang des Verzögerungsgliedes (7) und v die Fluggeschwindigkeit ist, einen vorgebbaren, mit dem Verstärkungsfaktor (G) des Verstärkers (10) identischen Grenzwert unterschreitet.

2. Vorrichtung nach Anspruch 1, dadurch gekennzeichnet, daß die Logikschaltung (14) einen die Ausgangssignale des ersten (8) und des zweiten Differenziergliedes (9) aufnehmenden, ersten Multiplizierer (20), einen die Ausgangssignale des zweiten Differenziergliedes (9) und des ersten Verstärkers (10) aufnehmenden, zweiten Multiplizierer (19), ein dessen Produktsignal von dem des ersten Multiplizierers (20) subtrahierendes Summationsglied (21) sowie eine im Falle eines negativen Summensignales des Summationsgliedes (21) den Schalter (21) schließende Schaltlogik (22) aufweist.

3. Vorrichtung nach einem der Ansprüche 1 oder 2, dadurch gekennzeichnet, daß dem Integrator (13) ausgangsseitig ein zweiter Verstärker (15) nachgeschaltet ist.

**Revendications**

1. Dispositif pour améliorer la stabilité de commande longitudinale d'aéronefs, en particulier d'hélicoptères, comprenant une timonerie de commande (2) qui est reliée d'une part à une servo-commande principale (4) pour la réglage des gouvernes de profondeur ou des pales de rotor et d'autre part au manche à balai (1) associé à ladite servo-commande principale et dans laquelle est inséré une servo-commande de correction prolongeant sur commande la timonerie de commande, un transmetteur de course (5) mesurant la course de commande de la timonerie de commande entre la servo-commande de correction et la servo-commande principale ainsi qu'un transmetteur de vitesse de vol (6) mesurant la vitesse de vol, caractérisé par un élément de retard (7) recevant le signal de sortie (D) du transmetteur de position (5), un premier élément différenciateur (8) monté en aval dudit élément de retard, un deuxième élément différenciateur (9) recevant le signal de sortie du transmetteur de vitesse de vol (6), un premier amplificateur (10) linéaire monté en aval dudit élément différenciateur, un élément sommateur (11) soustrayant le signal de sortie dudit amplificateur de celui du premier élément différenciateur (8), un intégrateur (13) monté en aval dudit élément d'addition et relié côté sortie à la servo-commande de correction (3), un interrupteur (12) inséré entre l'élément sommateur (11) et l'intégrateur (13) ainsi qu'un circuit logique (14) qui pilote ledit interrupteur (12) et le ferme dès que le gradient de la fonction $D_T$ (v), où $D_T$ est le signal de position de commande retardé à la sortie de l'élément de retard (7) et v la vitesse de vol, tombe en dessous d'une valeur limite qui peut être prédéterminée et est identique au facteur d'amplification (G) de l'amplificateur (10).

2. Dispositif selon la revendication 1, caractérisé en ce que le circuit logique (14) présente un premier multiplicateur (10) recevant les signaux de sortie du premier (8) et du deuxième élément différenciateur (9), un deuxième multiplicateur (19) recevant les signaux de sortie du deuxième élément différenciateur (9) et du premier amplificateur (10), un élément sommateur (21) soustrayant le signal de produit dudit deuxième multiplicateur de celui du premier multiplicateur (20) ainsi qu'une logique de commutation (22) fermant l'interrupteur (12) en cas de signal de somme négatif de l'élément sommateur (21).

3. Dispositif selon l'une des revendications 1 ou 2, caractérisé en ce qu'un deuxième amplificateur (15) est relié à la sortie de l'intégrateur (13).

**Claims**

1. Apparatus for the improvement of longitudinal control stability of aircraft, in particular helicopters, comprising a control rod (2), which is connected at one side to the main control drive (4) for the elevator or the rotor-blade setting and at the other side to the control stick (1) associated therewith, into which rod is inserted a correction drive (3) for controllably extending the control rod, a displacement pick up (5), measuring the control path of the control rod between the correction drive and the main drive, as well as an airspeed indicator (6) measuring the airspeed, characterised by

a delay unit (7) loaded with the output signal (D) of the displacement pick up (5), and a first differentiating circuit (8) connected to the output side thereof;

a second differentiating circuit (9) loaded with the output signal of the airspeed indicator (6), and a first linear amplifier (10) connected to the output side thereof;

a summation circuit (11) substracting its output signal from that of the first differentiating circuit (8), and an integrator (13) connected to the output side thereof, and having its output side connected to the correction drive (3);

a switch (12) inserted between the summation circuit (11) and the integrator (13), as well as a logic circuit (14), which controls the switch (12) and closes it as soon as the gradient of the function $D_T$ (v), whereby $D_T$ is the delayed control-path signal at the output of the delay unit (7), and v is the airspeed, sinks below a given limiting value which is identical to the amplification factor (G) of the amplifier (10).

2. Apparatus according to claim 1, characterised in that the logic circuit (14) includes a first multiplier (20), accepting the output signal of the first (8) and the second (9) differentiating circuits, a second multiplier (19), accepting the output signals of the second differentiating circuit (9) and of the first amplifier (10), a summation circuit (21), which subtracts the product signal of the first multiplier (20), as well as a switch logic (22), which closes the switch (12) in the event of a negative-sum signal of the summation circuit (21).

3. Apparatus according to one of the claims 1 or 2, characterised in that a second amplifier (15) is connected to the output side of the integrator (13).

FIG. 1

FIG. 2

FIG. 3

2